# EUROPÄISCHE PATENTSCHRIFT

(11) **EP 3 966 463 B1**
(45) Veröffentlichungstag und Bekanntmachung des Hinweises auf die Patenterteilung: **08.03.2023**
(21) Anmeldenummer: 20721406.5
(22) Anmeldetag: 15.04.2020
(51) Int. Cl.: F16C 33/64, F16C 33/78, B23C 3/04, F16C 19/06

(54) **VERFAHREN ZUR BEARBEITUNG EINES LAGERRINGS UND ZUR HERSTELLUNG EINES WÄLZLAGERS, SOWIE WÄLZLAGER**
METHOD FOR MACHINING A BEARING RING AND FOR PRODUCING A ROLLING BEARING, AND ROLLING BEARING
PROCÉDÉ POUR USINER UNE BAGUE DE PALIER ET POUR FABRIQUER UN PALIER À ROULEMENT, ET PALIER DE ROULEMENT

(30) Priorität: 09.05.2019 DE 102019112061
(43) Veröffentlichungstag der Anmeldung: 16.03.2022
(73) Patentinhaber: Schaeffler Technologies AG & Co. KG, 91074 Herzogenaurach (DE)
(72) Erfinder: BUSCHKA, Martin, 91074 Herzogenaurach (DE); KUCKUK, André, 91056 Erlangen (DE); END, Silvio, 90562 Heroldsberg (DE)
(86) Internationale Anmeldenummer: PCT/DE2020/100297
(87) Internationale Veröffentlichungsnummer: WO 2020/224698

(56) Entgegenhaltungen:
- EP-A1- 2 508 282
- DE-A1-102009 039 279
- DE-B3-102004 045 438

## Beschreibung

Die Erfindung betrifft ein Verfahren zur Bearbeitung eines Wälzlagerrings. Ferner betrifft die Erfindung ein Verfahren zur Herstellung eines Wälzlagers sowie ein Wälzlager, insbesondere Radlager.

Die US 2010/0052262 A1 beschreibt eine, für ein Radlager vorgesehene Dichtungsvorrichtung, welche ein elastisches Dichtungselement und ein metallisches Anschlagelement umfasst. Das Anschlagelement weist hierbei eine durch Kugelstrahl-Behandlung bearbeitete Oberfläche auf.

Der Erfindung liegt die Aufgabe zugrunde, in der Wälzlagertechnik Fortschritte hinsichtlich der rationellen Herstellung von Anlaufflächen für Dichtungen zu erzielen.

Diese Aufgabe wird erfindungsgemäß gelöst durch ein Verfahren zur Bearbeitung eines Wälzlagerrings gemäß Anspruch 1 sowie durch ein Verfahren zur Herstellung eines Wälzlagers gemäß Anspruch 9. Ferner wird die Aufgabe gelöst durch ein Wälzlager mit den Merkmalen des Anspruchs 10. Im Folgenden im Zusammenhang mit dem Wälzlager erläuterte Ausgestaltungen und Vorteile der Erfindung gelten sinngemäß auch für das Bearbeitungs- sowie das Herstellungsverfahren und umgekehrt.

Das erfindungsgemäße Verfahren zur Bearbeitung eines Lagerrings eines Wälzlagers umfasst folgende Merkmale:
- Einspannen eines zur Herstellung des Lagerrings vorgesehenen Rohlings in eine Bearbeitungsmaschine,
- Strukturierung einer ringförmigen, eine Dichtfläche bildenden Oberfläche des Lagerrings durch ein Hochvorschubfräsen.

Ein zur Herstellung des Lagerrings vorgesehener, ringförmiger Rohling wird dabei insbesondere in einer Bearbeitungsmaschine, insbesondere eine Fräsmaschine, eingespannt, wobei alternativ zu einer Rotation des Rohlings auch eine nicht rotierende Anordnung des Rohlings möglich ist. Es erfolgt eine Strukturierung einer ringförmigen, eine Dichtfläche bildenden Oberfläche des Lagerrings durch das Hochvorschubfräsen.

Das Hochvorschubfräsen, auch HFM (High-Feed Milling) genannt, erlaubt hohe Zerspanleistungen bei gleichzeitig hohen Vorschüben und Schnittgeschwindigkeiten. Die dabei eingesetzten Hochleistungsfräser verfügen über eine spezielle Schneidengeometrie mit mehreren Schneidkanten. Es gibt sie mit und ohne Wendeschneidplatten.

Der Einsatz des Hochvorschubfräsens zur Erzeugung der Dichtfläche ermöglicht eine ganz gezielte Einstellung der Oberflächenstruktur und Oberflächenrauigkeit, so dass eine Reibung zwischen der Dichtung und der Dichtfläche gezielt eingestellt und minimiert werden kann.

Der Veröffentlichung "Hochvorschubfräsen zur Strukturierung von Werkzeugoberflächen für die Blechmassivumformung", Dennis Freiberg, ISBN 978-3-8027-8912-0, Vulkan Verlag, 03/2019, zeigt die Einflussmöglichkeiten des Hochvorschubfräsens auf damit gebildete Oberflächen auf.

Dabei sind für das Aussehen und die jeweiligen erzielten Rautiefen einer jeden Oberflächenstrukturierung unterschiedliche Bearbeitungsparameter beim Hochvorschubfräsen verantwortlich. Als Bearbeitungsparameter sind dabei insbesondere eine Vorschubrichtung des Hochvorschubfräsers, eine Vorschub- oder Schnittgeschwindigkeit des Hochvorschubfräsers, ein Anstellwinkel einer Rotationsachse des Hochvorschubfräsers gegenüber der zu bearbeitenden Oberfläche und eine Schnitttiefe des Hochvorschubfräsers zu nennen. Ein weiterer optionaler Bearbeitungsparameter ist hier eine Rotationsgeschwindigkeit des durch das Hochvorschubfräsen zu bearbeitenden Werkstücks bzw. Lagerrings.

Eine bevorzugte Schnittgeschwindigkeit für Metalle beträgt je nach Art des Metalls (spröde oder zäh) etwa 50 bis 300 m/min. Die Einstellung einer Schnitttiefe (axiale Zustellung) für den Hochvorschubfräser im Bereich von 1 bis 500 µm hat sich als vorteilhaft erwiesen.

Die durch die strukturierte Oberfläche des Lagerrings im Bereich der Dichtfläche sowie das elastische Dichtelement gebildete berührende Dichtung zeichnet sich durch eine geringe Reibung und geringe Verschleißanfälligkeit bei zugleich guter Dichtwirkung aus. Die Dichtwirkung bezieht sich hierbei sowohl auf die Zurückhaltung von Schmiermittel, das heißt Fett oder Öl, im Wälzlager als auch auf die Fernhaltung von Schmutz vom Inneren des Wälzlagers.

Insbesondere hat es sich bewährt, wenn das Hochvorschubfräsen mittels einer Stirnseite eines Hochvorschubfräsers erfolgt (= Stirnfräsen). Dies ermöglicht es, den Hochvorschubfräser im Hinblick auf die zu bearbeitende Fläche in einem Winkel beziehungsweise Anstellwinkel anzustellen. Besonders bevorzugt ist es dabei, wenn die Stirnseite in einem Winkel β_{f} von 0 bis 10° gegenüber der, die Dichtfläche bildenden Oberfläche des Lagerrings ausgerichtet geführt wird.

Es hat sich bewährt, wenn in derselben Einspannung, in welcher die eine Dichtfläche bildende Oberfläche des Lagerrings strukturiert wird, eine Laufbahn des Lagerrings spanabhebend erzeugt wird, wobei der Rohling während der beiden genannten Bearbeitungsschritte rotiert. Alternativ ist aber natürlich auch eine getrennte Bearbeitung des Lagerrings zur Bildung der Laufbahn und der Dichtfläche(n), also in unterschiedlicher Aufspannung, möglich. Dabei können auch räumlich getrennte und/oder unterschiedliche Bearbeitungsmaschinen zur Ausbildung der Laufbahn und zur Ausbildung der Dichtfläche(n) zum Einsatz kommen.

Sofern die Strukturierung der Dichtfläche bei rotierendem Werkstück erfolgt, wird also in bevorzugter Verfahrensführung in derselben Aufspannung, bei rotierendem Rohling, das heißt Werkstück, mindestens eine Wälzkörperlaufbahn des Lagerrings spanabhebend, das heißt durch Drehen und/oder Schleifen und/oder Honen, bearbeitet. Eine bevorzugte Rotationsgeschwindigkeit für das zu bearbeitende Werkstück, hier einen Lagerring, hängt vom Durchmesser des zu bearbeitenden Werkstücks, der Fräserposition und der zu erzielenden Oberflächenstruktur ab.

Mit diesem bevorzugten Verfahren werden mehrere Vorteile erreicht:
Zum einen ist eine rationelle sowie präzise Bearbeitung dadurch begünstigt, dass die strukturierte Oberfläche des Lagerrings in derselben Aufspannung erzeugt wird, in welcher auch die spanabhebende Bearbeitung des Lagerrings erfolgt. Zum anderen ist zur Herstellung eines Dichtkontaktes kein gesondertes Element, etwa in Form einer mit einem Lagerring zu verbindenden Anschlagscheibe oder eines Anlaufrings, erforderlich. Vielmehr kontaktiert innerhalb des Wälzlagers das an einem der Lagerringe befestigte elastische Dichtelement unmittelbar die hochvorschubgefräste Dichtfläche des anderen Lagerrings. Hierdurch ist gegenüber herkömmlichen Lösungen nicht nur die Teilezahl, sondern tendenziell auch der Raumbedarf des Wälzlagers minimiert.

In einer bevorzugten Ausführungsform des Verfahren wird während des Hochvorschubfräsens der verwendete Hochvorschubfräser gegenüber dem Lagerring in dessen Axialrichtung verschoben. Alternativ wird während des Hochvorschubfräsens der Hochvorschubfräser gegenüber dem Lagerring in dessen Radialrichtung verschoben.

Durch diese Verschiebung des Bearbeitungswerkzeugs wird auf der bearbeiteten Oberfläche beispielsweise eine Spirallinie, eine Schraubenlinie oder eine sich vielfach schneidende Wellenlinie beschrieben. In jedem Fall sind am Ende des Bearbeitungsvorgangs Vertiefungen, die auf der bearbeiteten, als Dichtfläche vorgesehenen Oberfläche erzeugt wurden, näherungsweise gleichmäßig, ausgedrückt als Anzahl der Vertiefungen pro Flächeneinheit, verteilt.

Somit hat es sich bewährt, wenn im Laufe des Hochvorschubfräsens der Hochvorschubfräser eine Schraubenlinie beziehungsweise eine Spirallinie auf der zu strukturierenden Oberfläche beschreibt. Alternativ hat es sich als vorteilhaft erwiesen, wenn im Laufe des Hochvorschubfräsens der Hochvorschubfräser eine sich vielfach schneidende Wellenlinie auf der zu strukturierenden Oberfläche beschreibt. So lassen sich unterschiedlichste Oberflächenstrukturen und Oberflächenrauigkeiten für die Dichtfläche einstellen, die auf den konkreten Anwendungsfall und seine Anforderungen zugeschnitten werden können.

Es hat sich bewährt, wenn im Bereich der durch Hochvorschubfräsen gebildeten Oberflächen der Dichtfläche(n) mindestens ein glättendes Nachbehandlungsverfahren eingesetzt wird. Als Nachbehandlungsverfahren eignet sich hierbei beispielsweise ein Bürsten, Strahlen, Ätzen oder dergleichen. Dadurch wird eine Reduzierung von Graten oder scharfen Kanten im Bereich der durch Hochvorschubfräsen gebildeten Oberflächen der Dichtfläche(n) erzielt, was zu einer längeren Haltbarkeit der an der Dichtfläche anlaufenden Dichtung führt. Das Risiko einer Verletzung oder Aufrauhung der Dichtung an ihrer Kontaktfläche zur Dichtfläche wird maßgeblich reduziert.

Das erfindungsgemäße Verfahren zur Herstellung des Wälzlagers umfasst folgende Schritte:
- Bereitstellung eines, eine mittels Hochvorschubfräsens strukturierte Oberfläche als Dichtfläche aufweisenden Lagerrings sowie eines weiteren Lagerrings,
- Platzierung einer Anzahl Wälzkörper zwischen den Lagerringen,
- Montage einer zwischen den Lagerringen wirksamen Dichtung derart, dass diese an dem weiteren Lagerring gehalten ist und die strukturierte Oberfläche kontaktiert.

Die durch die strukturierte Oberfläche des Lagerrings im Bereich der Dichtfläche sowie das elastische Dichtelement gebildete berührende Dichtung zeichnet sich durch eine geringe Reibung und geringe Verschleißanfälligkeit bei zugleich guter Dichtwirkung aus. Die Dichtwirkung bezieht sich hierbei sowohl auf die Zurückhaltung von Schmiermittel, das heißt Fett oder Öl, im Wälzlager als auch auf die Fernhaltung von Schmutz vom Inneren des Wälzlagers.

Das erfindungsgemäße Wälzlager umfasst mindestens zwei Lagerringe, zwischen welchen eine Anzahl Wälzkörper angeordnet sind, sowie mit mindestens einer Dichtung, welche an einem der Lageringe gehalten ist und eine hochvorschubgefräste Oberfläche des anderen Lagerrings kontaktiert.

Als Wälzkörper des Wälzlagers können Kugeln ebenso wie Nadeln oder Rollen, beispielsweise Zylinderrollen, Tonnenrollen oder Kegelrollen, vorgesehen sein. Das Wälzlager kann als ein- oder mehrreihiges Lager ausgebildet sein und zwei Lagerringe oder eine größere Zahl an Lagerringen, zum Beispiel drei Lagerringe, umfassen. Beispielsweise handelt es sich bei dem Wälzlager um ein Radlager für ein Kraftfahrzeug.

Insbesondere weist die strukturierte Oberfläche, also die hochvorschubgefräste Dichtfläche, Vertiefungen mit einer Rautiefe Rt von maximal 100 µm auf. Dies gewährleistet eine Aufrechterhaltung einer Dichtwirkung der Dichtung, die an der strukturierten Oberfläche beziehungsweise Dichtfläche anläuft, und bringt gleichzeitig eine Optimierung hinsichtlich einer, zwischen diesen auftretenden Reibung mit sich. Besonders bevorzugt ist eine Rautiefe Rt der strukturierten Oberfläche von maximal 10 µm gewählt. Eine Rautiefe Rt im Bereich von 3 µm bis 5 µm hat sich hier besonders bewährt.

Während einer der Lagerringe des Wälzlagers im Bereich der Dichtfläche durch Hochvorschubfräsen bearbeitet ist, ist beim anderen Lagerring in der Regel keine derartige Bearbeitung vorgesehen. Die Abdichtung des Wälzlagers kann entweder einseitig oder beidseitig vorhanden sein. Bei jedem der Lagerringe kann es sich entweder um einen einstückigen oder um einen geteilten Lagerring handeln.

In typischen Ausgestaltungen handelt es sich bei dem durch Hochvorschubfräsen bearbeiteten Lagerring des Wälzlagers um den Innenring. Als rotierender Lagerring kann aber entweder der Innenring oder der Außenring vorgesehen sein. Demnach kann der Lagerring mit der hochvorschubgefrästen Dichtfläche prinzipiell sowohl ein Innenring wie auch ein Außenring sein.

Nachfolgend werden zwei Ausführungsbeispiele der Erfindung anhand von Zeichnungen näher erläutert. Hierin zeigen:
- Fig. 1: in schematischer Darstellung die Bearbeitung einer Oberfläche eines Lagerrings durch Hochvorschubfräsen,
- Fig. 2: den mit dem Verfahren nach Figur 1 bearbeiteten Lagerring in perspektivischer Ansicht,
- Fig. 3: ein als Rillenkugellager ausgebildetes Wälzlager einschließlich des Lagerrings nach Figur 2,
- Fig. 4: ausschnittsweise ein als Radlager ausgebildetes Wälzlager mit einem gemäß Figur 1 bearbeiteten Lagerring, und
- Fig. 5: unterschiedliche, mittels Hochvorschubfräsens ausgebildete Oberflächenstrukturierungen auf Oberflächen aus einem metallischen Werkstoff.

Die folgenden Erläuterungen beziehen sich, soweit nicht anders angegeben, auf alle Ausführungsbeispiele. Einander entsprechende oder prinzipiell gleichwirkende Teile oder Strukturen sind in allen Figuren mit den gleichen Bezugszeichen gekennzeichnet.

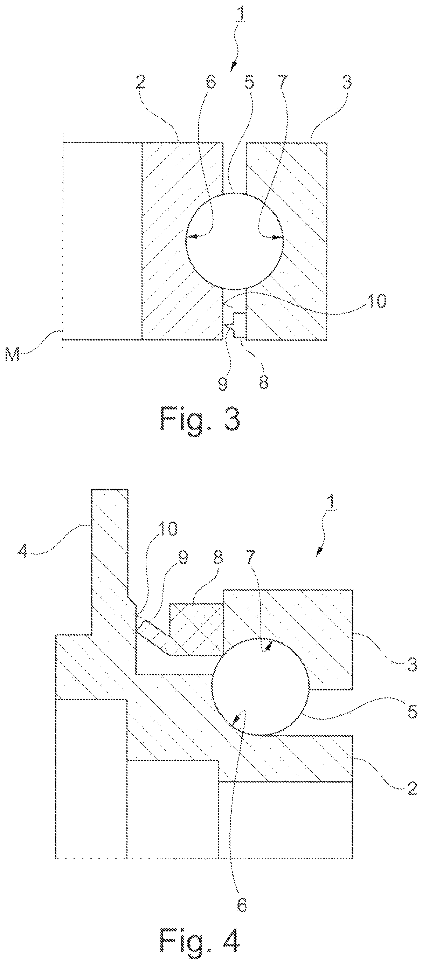

Ein insgesamt mit dem Bezugszeichen 1 gekennzeichnetes Wälzlager ist als Kugellager ausgebildet und umfasst einen Innenring 2 und einen Außenring 3 (vergleiche Figur 3). Beim in Figur 3 dargestellten Wälzlager 1 handelt es sich um ein Rillenkugellager, beim in Figur 4 nur ausschnittsweise skizzierten Wälzlager 1 um ein zweireihiges Schrägkugellager, nämlich ein Radlager für ein Kraftfahrzeug. In diesem Fall ist ein Flansch des Innenrings 2 mit 4 bezeichnet.

Zwischen den Lagerringen 2, 3 rollen in beiden Fällen Kugeln als Wälzkörper 5 ab. Die Wälzkörper 5 können in einem nicht dargestellten Käfig geführt sein. Eine die Wälzkörper 5 kontaktierende Laufbahn 6 des Innenrings 2 und eine die Wälzkörper 5 kontaktierende Laufbahn 7 des Außenrings 3 sind erkennbar.

Am Außenring 3 ist eine Dichtung 8 gehalten, welche eine Dichtlippe 9 aufweist. Die Dichtlippe 9 kontaktiert eine Oberfläche 10 des Innenrings 2, welche im Fall von Figur 3 parallel zur Mittelachse M ausgerichtet ist und einen zur Mittelachse M des Wälzlagers 1 konzentrischen Zylinder beschreibt. Im Fall von Figur 4 liegt die Oberfläche 10 dagegen auf einer Ebene, welche senkrecht zur Mittelachse M ausgerichtet ist. In beiden Fällen handelt es sich bei der Dichtung 8 um eine berührende Dichtung. In nicht dargestellter Weise kann die Dichtung 8 mehr als eine Dichtlippe 9 aufweisen.

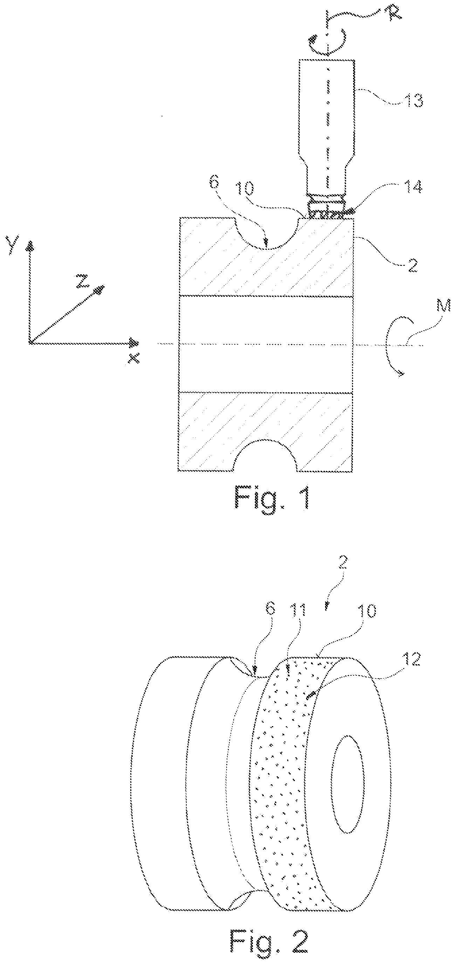

Die Oberfläche 10, welche von der Dichtlippe 9 kontaktiert wird, wird mittels Hochvorschubfräsens strukturiert, das in Figur 1 illustriert ist und eine Oberflächenstrukturierung 11 liefert. Dieses Verfahren kommt bei der Herstellung des Innenrings 2 des Wälzlagers 1 nach Figur 3 ebenso wie bei der Herstellung des Innenrings 2 des Wälzlagers 1 nach Figur 4 zum Einsatz. Eine glättende Nachbearbeitung der als Dichtfläche vorgesehenen Oberfläche 10 nach dem Hochvorschubfräsen erfolgt nicht.

Zur Herstellung des Innenrings 2 wird ein Rohling, dessen Grundform der Form des späteren Innenrings 2 entspricht, in eine nicht dargestellte Bearbeitungsmaschine, insbesondere Fräsmaschine, eingespannt. Während der folgenden Bearbeitung rotiert der Rohling, das heißt der spätere Innenring 2, um dessen Mittelachse M in einer Schnittgeschwindigkeit v_{c}. Die Bearbeitung des Rohlings während der Einspannung in die Bearbeitungsmaschine schließt eine spanende Bearbeitung der Wälzkörperlaufbahn 6 ein.

In dem in den Figuren 1 bis 3 skizzierten Beispiel ist das Wälzlager 1 nur einseitig abgedichtet. Dementsprechend weist das Wälzlager 1 nur eine einzige zylindrische Oberfläche 10 auf, welche innerhalb des fertig montierten Wälzlagers 1 (vergleiche Figur 3) als Dichtfläche fungiert. Die in Figur 2 angedeutete Oberflächenstrukturierung 11 der Oberfläche 10 ist ebenso im Ausführungsbeispiel nach Figur 4 gegeben. Die Oberflächenstrukturierung 11 hat die Form zahlreicher Vertiefungen 12. Die Rautiefe Rt der strukturierten Oberfläche 10 liegt im hier Bereich von 3 bis 5 µm.

Zur Erzeugung der Vertiefungen 12 wird ein Werkzeug 13 in Form eines Hochvorschubfräsers 14 verwendet. Das Werkzeug 13 ist an der Bearbeitungsmaschine installiert.

Dabei kann der Hochvorschubfräser 14 in einem X-Y-Z-Koordinatensystem (vergleiche Figur 1) gegenüber der Mittelachse M in der X-Y-Ebene gesehen und/oder in der Y-Z-Ebene gesehen angewinkelt ausgerichtet sein. Der Hochvorschubfräser 14 wird in Richtung der Y-Achse axial zugestellt, das heißt es erfolgt ein Materialabtrag, indem dieser in Richtung der Rotationsachse M zugestellt wird.

Zur Herstellung der Oberflächenstrukturierung 11 des Innenrings 2 gemäß Figur 4 wird das Werkzeug 13 beispielsweise langsam und gleichmäßig radial von innen nach außen oder von außen nach innen verfahren. Die damit erzeugten Vertiefungen 12 liegen theoretisch auf einer Spirallinie. Wird dagegen das Werkzeug 13 mit vergleichsweise hoher Frequenz zwischen einem ersten Extrempunkt, welcher radial innen liegt, und einem zweiten Extrempunkt, welcher die radial äußere Begrenzung der Oberfläche 10 darstellt, verfahren, so entstehen zunächst Wellenformen der Oberflächenstrukturierung 11, welche in einer einzigen Ebene, nämlich der Ebene der Oberfläche 10 liegen. Im Laufe mehrerer Umdrehungen des Innenrings 2 überschneiden sich diese Wellen, prinzipiell vergleichbar mit dem Ausführungsbeispiel nach Figur 1, mehrfach, sodass auch in diesem Fall eine hohe Gleichförmigkeit der Verteilung der Vertiefungen 12 innerhalb der Oberfläche 10 erreicht wird.

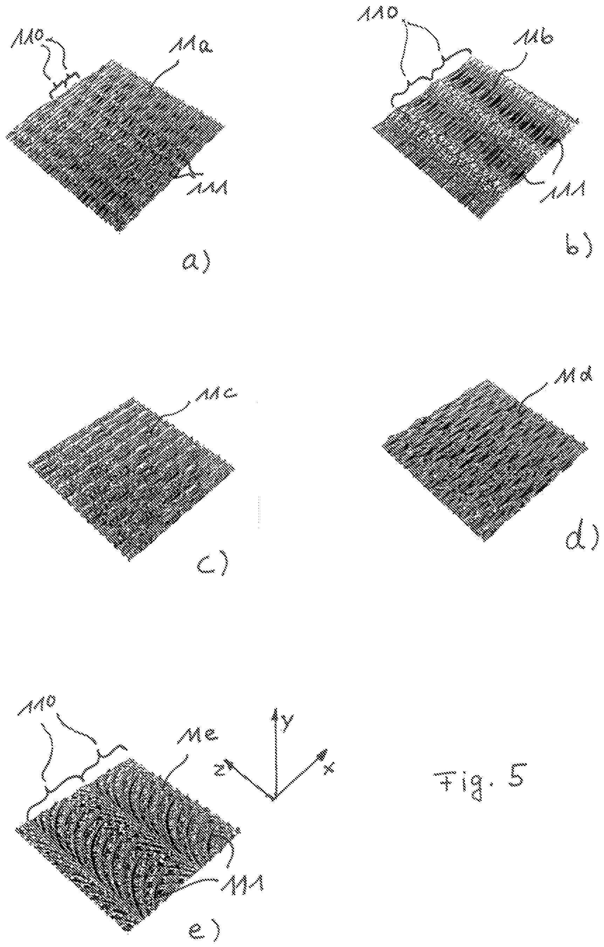

Figur 5 zeigt in den Darstellungen 5 a) - 5e) fünf unterschiedliche, mittels Hochvorschubfräsens ausgebildete Oberflächenstrukturierungen 11a bis 11e auf ebenen Oberflächen aus metallischem Werkstoff, insbesondere Stahl. Dabei sind für das Aussehen und die jeweiligen erzielten Rautiefen einer jeden Oberflächenstrukturierung 11a bis 11e unterschiedliche Bearbeitungsparameter beim Hochvorschubfräsen verantwortlich. Zu jeder Oberflächenstrukturierung 11a bis 11e sind nachfolgend die Parameter Schnittgeschwindigkeit v_{c}, axiale Zustellung aₑ, radiale Zustellung aₚ, Vorschub pro Zahn f_{z} und Anstellwinkel β_{f} angegeben, die bei identischem Fräser zu deren Bildung verwendet wurden.
Fig. 5a):
   v_{c} = 100 m/min
   aₑ = 1 mm
   aₚ = 100 µm
   f_{z} = 0,05 mm
   β_{f} = 0,1°
Fig 5b):
   v_{c} = 100 m/min
   aₑ = 3 mm
   aₚ = 100 µm
   f_{z} = 0,3 mm
   β_{f} = 5°
Fig 5c):
   v_{c} = 100 m/min
   aₑ = 1 mm
   aₚ = 100 µm
   f_{z} = 0,1 mm
   β_{f} = 0,1°
Fig 5d):
   v_{c} = 100 m/min
   aₑ = 1 mm
   aₚ = 100 µm
   f_{z} = 0,15 mm
   β_{f} = 0,1°
Fig. 5e)
   v_{c} = 100 m/min
   aₑ = 1 mm
   aₚ = 100 µm
   f_{z} = 0,3 mm
   β_{f} = 0,5°

Das Aussehen einer Dichtfläche kann dabei beispielsweise so ausgebildet werden, dass parallel verlaufende Bearbeitungsspuren 110 eines Hochvorschubfräsers 14 sich in einer Längsstruktur zeigen, die in Richtung der Vorschubrichtung verläuft, wobei innerhalb einer solchen Bearbeitungsspur 110 bogen- oder teilkreisförmige Frässpuren 111 als Querstruktur, die im Wesentlichen senkrecht zur Längsstruktur ausgebildet ist, zu erkennen sind (vergleiche Figuren 5a), 5b) und 5e) ). Aber auch gleichmäßigere Oberflächenstrukturierungen, die keine ausgeprägte Längsstruktur zeigen, sind herstellbar (vergleiche Figuren 5c), 5d) ).

Das X-Y-Z-Koordinatensystem, das zu Darstellung 5e) exemplarisch dargestellt ist, soll die Bearbeitungsparameter verdeutlichen. So ist die Schnittgeschwindigkeit v_{c} in Schnittrichtung entlang der Z-Achse angegeben, die axiale Zustellung aₑ ist in Richtung der Y-Achse angegeben, die radiale Zustellung aₚ ist in Richtung der X-Achse angegeben, der Vorschub pro Zahn f_{z} ist in Richtung der Z-Achse angegeben und der Anstellwinkel β_{f} der Rotationsachse R des Hochvorschubfräsers 14 (vergleiche Figur 1) ist hinsichtlich der X-Z-Ebene angegeben.

Durch wenige Versuche unter Variation der Bearbeitungsparameter beim Hochvorschubfräsen sind hier verschiedene, für den Einsatz als Oberflächenstrukturierung für eine Dichtfläche optimal geeignete Oberflächen erzeugbar. Dabei ist allerdings zu berücksichtigen, dass unterschiedliche Ausgestaltungen des verwendeten Fräsers hinsichtlich der Schneidenanzahl (oder Zahnanzahl) und Schneidenanordnung ebenfalls einen Einfluß auf die erzielte Oberflächenstruktur besitzt. So werden bei Verwendung gleicher Bearbeitungsparameter, jedoch unterschiedlicher Fräsergeometrien, unterschiedliche Oberflächenstrukturen erzielt. Der Durchschnittsfachmann ist jedoch bei gegebenem Fräser ohne weiteres in der Lage, hier geeignete Oberflächenstrukturen für Dichtflächen von Lagerringen anhand weniger Versuche unter Veränderung der Bearbeitungsparameter beim Hochvorschubfräsen aufzufinden.

### Bezugszeichenliste

- 1: Wälzlager
- 2: Innenring
- 3: Außenring
- 4: Flansch
- 5: Wälzkörper
- 6: Laufbahn des Innenrings
- 7: Laufbahn des Außenrings
- 8: Dichtung
- 9: Dichtlippe
- 10: Oberfläche
- 11, 11a - e: Oberflächenstrukturierung
- 110: Bearbeitungsspur
- 111: Frässpur
- 12: Vertiefung
- 13: Werkzeug
- 14: Hochvorschubfräser

- M: Mittelachse
- R: Rotationsachse
- X: X-Koordinate
- Y: Y-Koordinate
- Z: Z-Koordinate

## Patentansprüche

1. Verfahren zur Bearbeitung eines Lagerrings (2,3) eines Wälzlagers (1), mit folgenden Merkmalen:
- Einspannen eines zur Herstellung des Lagerrings (2, 3) vorgesehenen Rohlings in eine Bearbeitungsmaschine,
- Strukturierung einer ringförmigen, eine Dichtfläche bildenden Oberfläche (10) des Lagerrings (2, 3) durch ein Hochvorschubfräsen.

2. Verfahren nach Anspruch 1, **dadurch gekennzeichnet, dass** das Hochvorschubfräsen mittels einer Stirnseite eines Hochvorschubfräsers (14) erfolgt.

3. Verfahren nach Anspruch 2, **dadurch gekennzeichnet, dass** die Stirnseite in einem Winkel von 0 bis 10° gegenüber der, die Dichtfläche bildenden Oberfläche (10) des Lagerrings (2, 3) ausgerichtet geführt wird.

4. Verfahren nach einem der Ansprüche 1 bis 3, **dadurch gekennzeichnet, dass** in derselben Einspannung, in welcher die eine Dichtfläche bildende Oberfläche (10) des Lagerrings (2, 3) strukturiert wird, eine Laufbahn (6, 7) des Lagerrings (2, 3) spanabhebend erzeugt wird, wobei der Rohling während der beiden genannten Bearbeitungsschritte rotiert.

5. Verfahren nach einem der Ansprüche 1 bis 4, **dadurch gekennzeichnet, dass** während des Hochvorschubfräsens der Hochvorschubfräser (14) gegenüber dem Lagerring (2, 3) in dessen Axialrichtung verschoben wird.

6. Verfahren nach einem der Ansprüche 1 bis 4, **dadurch gekennzeichnet, dass** während des Hochvorschubfräsens der Hochvorschubfräser (14) gegenüber dem Lagerring (2, 3) in dessen Radialrichtung verschoben wird.

7. Verfahren nach Anspruch 5 oder 6, **dadurch gekennzeichnet, dass** im Laufe des Hochvorschubfräsens der Hochvorschubfräser (14) eine Schraubenlinie beziehungsweise eine Spirallinie auf der zu strukturierenden Oberfläche (10) beschreibt.

8. Verfahren nach Anspruch 5 oder 6, **dadurch gekennzeichnet, dass** im Laufe des Hochvorschubfräsens der Hochvorschubfräser (14) eine sich vielfach schneidende Wellenlinie auf der zu strukturierenden Oberfläche (10) beschreibt.

9. Verfahren zur Herstellung eines Wälzlagers (1), mit folgenden Schritten:
- Bereitstellung eines nach dem Verfahren nach Anspruch 1 mittels Hochvorschubfräsens strukturierte Oberfläche (10) aufweisenden Lagerrings (2,3) sowie eines weiteren Lagerrings (3, 2),
- Platzierung einer Anzahl Wälzkörper (5) zwischen den Lagerringen (2, 3),
- Montage einer zwischen den Lagerringen (2, 3) wirksamen Dichtung (8) derart, dass diese an dem weiteren Lagerring (3, 2) gehalten ist und die strukturierte Oberfläche (10) kontaktiert.

10. Wälzlager (1), mit mindestens zwei Lagerringen (2, 3), zwischen welchen eine Anzahl Wälzkörper (5) angeordnet sind, sowie mit mindestens einer Dichtung (8), welche an einem der Lageringe (2, 3) gehalten ist und eine hochvorschubgefräste Oberfläche (10) des anderen Lagerrings (3, 2) kontaktiert.

11. Wälzlager nach Anspruch 10, **dadurch gekennzeichnet, dass** dieses als Radlager ausgebildet ist.

## Claims

1. A method for machining a bearing ring (2, 3) of a rolling bearing (1), comprising the following features:
- clamping a blank provided for producing the bearing ring (2, 3) into a machine tool,
- structuring an annular surface (10) of the bearing ring (2, 3) by high-feed milling, said surface forming a sealing face.

2. The method according to claim 1, **characterised in that** the high-feed milling is carried out by means of an end face of a high-feed milling cutter (14).

3. The method according to claim 2, **characterised in that** the end face is guided at an angle of 0 to 10° with respect to the surface (10) of the bearing ring (2, 3) forming the sealing face.

4. The method according to one of claims 1 to 3, **characterised in that** in the same clamping, in which the surface (10) of the bearing ring (2, 3) forming a sealing face is structured, a raceway (6, 7) of the bearing ring (2, 3) is produced by machining, wherein the blank rotates during the two aforementioned machining steps.

5. The method according to one of claims 1 to 4, **characterised in that** during the high-feed milling, the high-feed milling cutter (14) is moved with respect to the bearing ring (2, 3) in its axial direction.

6. The method according to one of claims 1 to 4, **characterised in that** during the high-feed milling, the high-feed milling cutter (14) is moved with respect to the bearing ring (2, 3) in its radial direction.

7. The method according to claim 5 or 6, **characterised in that** in the course of the high-feed milling, the high-feed milling cutter (14) describes a helix or a spiral line on the surface (10) to be structured.

8. The method according to claim 5 or 6, **characterised in that** in the course of the high-feed milling, the high-feed milling cutter (14) describes a multiply intersecting wavy line on the surface (10) to be structured.

9. The method for producing a rolling bearing (1), comprising the following steps:
- providing a bearing ring (2, 3) having a surface (10) structured by means of high-feed milling in accordance with the method according to claim 1, and a further bearing ring (3, 2),
- placing a number of rolling elements (5) between the bearing rings (2, 3),
- mounting a seal (8) that is effective between the bearing rings (2, 3) such that it is held on the further bearing ring (3, 2) and contacts the structured surface (10).

10. A rolling bearing (1), comprising at least two bearing rings (2, 3), between which a number of rolling elements (5) are arranged, and comprising at least one seal (8), which is held on the bearing ring (2, 3) and contacts a high-feed milled surface (10) of the other bearing ring (3, 2).

11. The rolling bearing according to claim 10, **characterised in that** it is designed as a wheel bearing.

## Revendications

1. Procédé pour usiner une bague de palier (2, 3) d'un palier à roulement (1), avec les caractéristiques suivantes :
- serrage d'une ébauche destinée à la fabrication de la bague de palier (2, 3) dans une machine d'usinage,
- structuration par un fraisage grande avance d'une surface (10) annulaire de la bague de palier (2, 3) formant une surface d'étanchéité.

2. Procédé selon la revendication 1, **caractérisé en ce que** le fraisage grande avance est effectué au moyen d'une face avant d'une fraise grande avance (14).

3. Procédé selon la revendication 2, **caractérisé en ce que** la face avant est guidée pour être orientée selon un angle de 0 à 10° par rapport à la surface (10) de la bague de palier (2, 3) formant la surface d'étanchéité.

4. Procédé selon l'une quelconque des revendications 1 à 3, **caractérisé en ce que** dans le même serrage, au cours duquel la surface (10) de la bague de palier (2, 3) formant une surface d'étanchéité a été structurée, une voie de roulement (6, 7) de la bague de palier (2, 3) est produite par enlèvement de copeaux, l'ébauche tournant pendant les deux étapes d'usinage mentionnées.

5. Procédé selon l'une quelconque des revendications 1 à 4, **caractérisé en ce que** pendant le fraisage grande avance, la fraise grande avance (14) est déplacée par rapport à la bague de palier (2, 3) dans sa direction axiale.

6. Procédé selon l'une quelconque des revendications 1 à 4, **caractérisé en ce que** pendant le fraisage grande avance, la fraise grande avance (14) est déplacée par rapport à la bague de palier (2, 3) dans sa direction radiale.

7. Procédé selon la revendication 5 ou 6, **caractérisé en ce que** au cours du fraisage grande avance, la fraise grande avance (14) décrit une hélice, plus particulièrement une spirale, sur la surface (10) à structurer.

8. Procédé selon la revendication 5 ou 6, **caractérisé en ce que** au cours du fraisage grande avance, la fraise grande avance (14) décrit une ligne ondulée aux multiples croisements sur la surface (10) à structurer.

9. Procédé de fabrication d'un palier à roulement (1), comprenant les étapes suivantes :
- préparation d'une bague de palier (2, 3) présentant une surface (10) structurée au moyen d'un fraisage grande avance selon le procédé de la revendication 1, ainsi que d'une autre bague de palier (3, 2),
- placement d'un certain nombre de corps roulants (5) entre les bagues de palier (2, 3),
- montage d'un joint d'étanchéité (8) actif entre les bagues de palier (2, 3) de sorte que celui-ci soit maintenu sur l'autre bague de palier (3, 2) et entre en contact avec la surface structurée (10).

10. Palier à roulement (1), comprenant au moins deux bagues de palier (2, 3), entre lesquelles un certain nombre de corps roulants (5) sont agencés, ainsi qu'au moins un joint d'étanchéité (8), qui est maintenu sur une des bagues de palier (2, 3) et entre en contact avec une surface fraisée grande avance (10) de l'autre bague de palier (3, 2).

11. Palier à roulement selon la revendication 10, **caractérisé en ce que** celui-ci est conçu comme un palier de roue.
